(19) **Europäisches Patentamt / European Patent Office / Office européen des brevets**

(11) **EP 2 188 223 B1**

(12) **EUROPEAN PATENT SPECIFICATION**

(45) Date of publication and mention
of the grant of the patent:
**21.09.2011 Bulletin 2011/38**

(51) Int Cl.:
*C02F 3/22* (2006.01)        *B01F 3/04* (2006.01)

(21) Application number: **08788223.9**

(22) Date of filing: **18.07.2008**

(86) International application number:
**PCT/GB2008/002497**

(87) International publication number:
**WO 2009/022093 (19.02.2009 Gazette 2009/08)**

(54) **METHOD AND APPARATUS FOR AERATION**

VERFAHREN UND VORRICHTUNG ZUR BELÜFTUNG

PROCÉDÉ ET APPAREIL POUR AÉRATION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **15.08.2007 GB 0715909**

(43) Date of publication of application:
**26.05.2010 Bulletin 2010/21**

(73) Proprietor: **United Utilities Plc.
Warrington WA5 3LP (GB)**

(72) Inventor: **LE, Minh, Son
Northwich
Cheshire CW9 8NB (GB)**

(74) Representative: **Teasdale, Nicola Joanne et al
Marks & Clerk LLP
1 New York Street
Manchester, M1 4HD (GB)**

(56) References cited:
**FR-A- 2 798 602**

Printed by Jouve, 75001 PARIS (FR)

**Description**

The pre*sent invention relates to a method and apparatus for aerating or oxygenating a liquid. In particular, the present invention relates to a method and apparatus for aerating or oxygenating a liquid for example but not limited to wastewaters and more particularly for the treatment of wastewaters by a biological process.

Biological processes are often used for the removal of Chemical Oxygen Demand (COD) and other nutrients such as ammonia and phosphate from wastewaters. The efficiency of such processes is usually limited by the rates at which oxygen may be transferred to the micro-organisms present in the wastewaters.

For example, in the treatment of sewage by the so-called activated sludge process, the energy used to provide the oxygen by aeration accounts for over half of the energy consumption of the treatment plant.

Two of the most commonly used methods of aeration are:

   (i) the use of surface aerators; and
   (ii) membrane diffusers.

Surface aerators are low cost but operate with an aeration efficiency of only 1.0 - 1.5 kg $O_2$/kWh in activated sludge applications. On the other hand, membrane diffusers are more costly but have better efficiency with values at 1.5 - 2.0 kg $O_2$/KWh. However, in terms of energy usage, such values still represent less than 15% energy efficiency.

It is desirable to obtain as high a rate of oxygen transfer to the wastewater whilst using as little energy as possible.

Many attempts have been made to try and improve the efficiency of the aeration process. For example, Hines et al (U.S. Patent 4,253,949) describes a sewage treatment apparatus wherein, the sewage containing dissolved air is circulated around a system comprising a down-comer and a riser. Part of the mixture in the riser is introduced into a flotation chamber in which the hydrostatic pressure gradually decreases as the mixture flows upwards, with consequent release from solution of air bubbles that carry the micro-organisms to the top of the mixture.

The devices of the invention taught by Hines et al, are commonly known as air-lift reactors and they have been used predominantly for fermentation processes such as the ICI™ single cell protein production.

Nonetheless, a number of systems known as "deep shaft" reactors use such processes for wastewater treatment. The aeration efficiency of 'deep shaft' processes is of the order of 5 - 8 kg $O_2$/kWh.

Following the original development of the deep shaft reactor technology, there have been other improvements in long vertical shaft reactor systems for wastewater treatment. For example, U.S. Pat. No 4,466,928 (Kos) discloses a system that includes an apparatus for dissolving gas in the liquid.

The apparatus comprises an inlet for introducing a liquid into the apparatus, means for injecting a gas into the apparatus to produce a gas-liquid mixture, a contact chamber for maintaining the mixture at elevated pressure, a flow distributor at the upper end of the contact chamber having a plurality of nozzles extending in a downstream direction forming an upper gas trap, the contact chamber being of essentially uniform cross-section so that a constant velocity of the gas-liquid mixture is maintained therein. A gas disengagement chamber at the lower end of the contact chamber forming a lower gas trap, a recycle conduit external to the lower gas trap so that the gas in lower gas trap is injected into said upper gas trap by the differential pressure for further dissolution in the liquid, and an outlet to permit the treated liquid to exit the disengagement chamber. The Kos systems are more suitable for use with pure oxygen and are not suitable for use with air as would be the case with the invention of Hines et al.

Despite their substantially improved oxygen transfer efficiencies, the processes of Kos and Hines et al. have not achieved significant commercial success due to the inherent problem of constructing such a large reactor, and moreover such a large reactor which is substantially deep underground. The operation of these processes also requires high-pressure gas compressors to enable gas injection to take place at great depths, with the associated problems of installation and high running costs.

A more recent development in aerating methodology has been disclosed by Dyson (US Patent 7,121,534). The Dyson method involves passing a liquid to be aerated down a surface in the presence of air and into standing liquid. The surface has at least one change in gradient to provide a surface for the development of turbulence that is essential in drawing air into the liquid.

According to Dyson, one side of the flowing liquid must be bounded by a wall of a column that extends into the standing liquid and the other side of the liquid is bounded by an interface with air that occupies the rest of the column such that gas is drawn into the standing liquid. The movement of the liquid over the surface of the column is such as to generate turbulence in the liquid that is passed along a plane surface of progressively increasing gradient for at least part of its downward flow into the standing liquid. The method of Dyson is both simple and elegant. It has few moving parts and is very economical to construct. However, with a claimed aeration efficiency of only 1.5 - 2.5 kg $O_2$/KWh, it has not been successful in displacing the more traditional aeration methods in wastewater treatment. The poor energy efficiency of the Dyson method arises from the fact that the liquid has to be raised by about 0.5m above the standing liquid to achieve flow and the turbulence necessary for the generation of the air bubbles.

The document FR2 798 602 discloses a typical prior art apparatus for aerating a liquid.

It is therefore the aim of the present invention to provide an improved method for aerating a liquid that overcomes the disadvantages of current methods as described above.

It is a further aim of the present invention is provide an improved apparatus for aerating a liquid, that is of higher efficiency and more economical to construct than the currently available apparatus as described above.

Therefore, according to a first aspect of the present invention there is provided:

a method suitable for aerating a liquid, the method comprising:

(i) drawing the liquid to be treated down a vertical pipe at a predetermined velocity in the range of 5 cm/s to 100 cm/s to entrain air bubbles comprising oxygen-enriched air into the moving liquid forming an air liquid mixture, wherein the vertical pipe has a length in the range of 10 to 90 meters and is located below the reactor;
(ii) maintaining the air bubbles in liquid contact for a minimum period under increasing hydrostatic pressure to dissolve the air; and
(iii) returning the aerated liquid to the reactor,
wherein the air bubbles being generated within 50 cm of the liquid surface above or close to the inlet of said vertical pipe, and wherein the air-water mixture comprises 3-30% air by volume under normal atmospheric conditions.

In accordance with a second aspect of the present invention there is provided an apparatus suitable for use in aerating a liquid in a reactor, the apparatus comprising:

(i) a vertical pipe in liquid communication with said reactor and being arranged so that surface liquid can be drawn into the pipe at a velocity of between 5 cm/s to 100 cm/s, wherein,
the length of the pipe is in the range 10 and 90 meters and is located below the reactor and is sufficient to provide a minimum air liquid contact period under increasing hydrostatic pressure; and
(ii) a means for generating air bubbles close to the surface of the liquid above or close to the inlet of said vertical pipe wherein the size range of the bubbles is between 0,2 to 5,00 mm in diameter; and further comprising,
a means for returning the aerated liquid back into the reactor; and
a means for drawing the liquid down the pipe.

It is also preferred that the contact period is preferably in the range of 5 seconds to 500 seconds, more preferably, in the range of 10 seconds to 300 seconds.

In accordance with the method the size range of the air bubbles is 0.2 to 5.0 mm in diameter.

The air bubbles are generated within 50 cm of the liquid surface. More preferably, the air bubbles are generated within 5 cm of the liquid surface.

According to the present invention the hydrostatic pressure is preferably defined by the product of the down flow liquid velocity and the air liquid contact period in the vertical pipe.

That is:

$$HM = (down\ flow\ liquid\ velocity) \times (air\ liquid\ contact\ period)$$

wherein:

HM - is the hydrostatic pressure in m of water
down flow liquid velocity - is the liquid velocity in the vertical pipe in metres per second
air liquid contact period - is the length of time in seconds it takes for the surface liquid to reach the bottom of the vertical pipe.

It should be noted that the actual contact time between the bubbles and the liquid is not a fixed quantity as it depends on the size of the bubbles which would have a distribution.

The bubbles generated according to the present invention comprise oxygen-enriched air.

The air-water mixture of the method comprises 3 to 30% air by volume under normal atmospheric conditions. Preferably the air-water mixture comprises 5 to 25% air by volume under normal atmospheric condition.

According to the invention; the length of the length of vertical pipe is in the range 10 metres to 90 metres, preferably the length of vertical pipe is in the range 25 metres to 75 metres.

According to the invention the vertical pipe is disposed underneath the reactor.

The bubbles generated during the method according to a fist aspect of the present invention or in the apparatus according to a second aspect of the present invention are preferably generated by a means selected from the group comprising: overflow weirs, rotating impellers, membrane diffusers, coarse diffusers and nozzles in conjunction with air blowers or compressors.

The means for drawing the liquid down the pipe preferably comprises a liquid moving device such as for example but not limited to one or more marine impellers or helical screws.

It should be understood that the term liquid refers to any wastewater, sludge or fermentation media that is to be treated biologically. The terms air or gas refer to any gaseous medium containing some oxygen or complete oxygen.

Air contains about 20% oxygen and has a density of 1.3 kg/m$^3$ under normal atmospheric condition. Also under normal atmospheric conditions water can become saturated at a concentration of 10 g $O_2$/m$^3$ water. This means that 38.5litres (L) of air would contain enough oxygen to cause saturation in a cubic metre of water under normal atmospheric condition. The air/water ratio at the oxygen saturation point is therefore 3.7% by volume and by introducing more air bubbles into the water any excess air would represent waste energy. According to Henry's law, the solubility of a gas in water is proportional to the gas pressure. Thus, it should be possible to raise the saturation concentration by increasing the air water contact pressure.

It has been found that it is possible to generate an air water mixture of about 20-30% by volume under normal atmospheric conditions. Mixtures with a greater proportion of air are not stable because the bubbles would coalesce rapidly. An air water mixture of 25% would contain enough oxygen to produce a saturation concentration of 86 g $O_2$/ m$^3$ water. However, such a saturation level would require an air water contact pressure of 8.6 atmospheres according to Henry's law. The prior art, for example Hines et al, suggests that a contact pressure of 8.6 atmospheres could be achieved by injecting air at 8.6 atmospheres into a liquid column at a depth of 86 m. However, as already mentioned injection of air to such a depth would require a very high energy level.

The air bubbles may be generated by any known means. For example air bubbles may be produced by passing a liquid over a weir, blowing air through a membrane diffuser or by agitating the surface of a liquid with a mechanical device such as an impeller. It has been found that these surface bubbles are mostly in the size range of 0.2-5 mm diameter for an air water system and surprisingly they require very little energy to generate.

Air bubbles in a liquid have a tendency to rise and would accelerate to a steady state velocity known as the terminal velocity. It has been found that in order to overcome the bubble terminal velocity and to entrain the mentioned surface bubbles, the liquid must be induced to flow at a minimum velocity of 5 cm/s. A more suitable velocity would be in the range 10 to 100 cm/s. Preferably the liquid velocity should be in the range 20 cm/s to 75 cm/s. The air water contact time is determined by the liquid velocity and the length of the vertical pipe. For example, if the pipe length is 100m and the liquid velocity is 50cm/s the contact time would be 200 seconds. At such a depth a contact time of 200 seconds is adequate to achieve oxygen saturation.

It has been discovered that the mentioned surface air bubbles can be entrained by a liquid as it flows vertically down a pipe and surprisingly as the air bubbles are taken to a greater depth more oxygen is dissolved by the increasing hydrostatic pressure. Importantly it has been found that high levels of dissolved oxygen, as much as 86 g $O_2$/m$^3$ water can be achieved without the need for air or oxygen injection at high pressure.

For a better understanding of the present invention and to show more dearly how it may be carried into effect, the invention will now be described in further details with reference to and by way of example only, to the accompanying examples and drawings in which:

Figure 1 - is a diagrammatic sketch of an apparatus not according, to the present invention; and
Figure 2 - is a diagrammatic sketch of an apparatus according to the present invention.

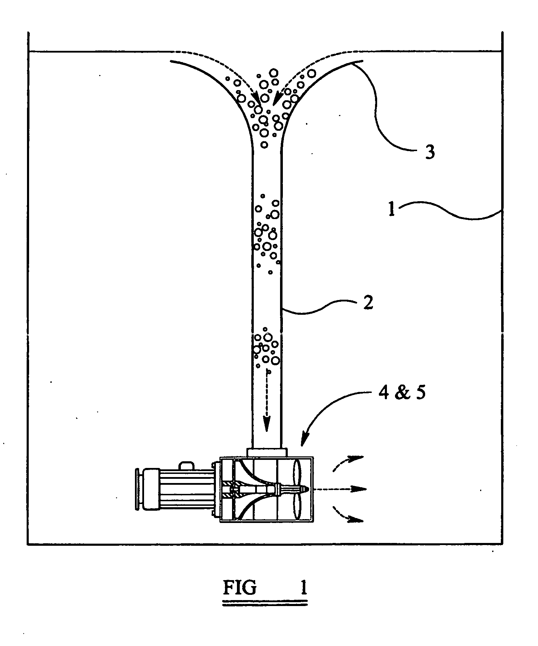

Referring to Figure 1 of the accompanying drawings, an apparatus for aerating a liquid not according to the present invention is illustrated. The apparatus comprises a reactor 1 for storing the liquid to be treated, a vertical pipe 2 suspended in reactor 1, a bell-mouth-shaped weir as a means for bubble generation 3 and means for inducing flow 4 which also acts as means 5 for returning aerated liquid back to the reactor 1.

As the liquid is drawn down the vertical pipe it leaves a void in the bell mouth that becomes a weir as more water falls over its edge to fill the void and thus create a high density of surface bubbles within the bell mouth. Bubbles that are small enough are entrained and carried by the liquid flow and dissolve in the liquid as they move towards the bottom of the pipe where the hydrostatic pressure is greatest. Larger bubbles rise back to the liquid surface where they are broken to smaller sizes by the forces of the falling water.

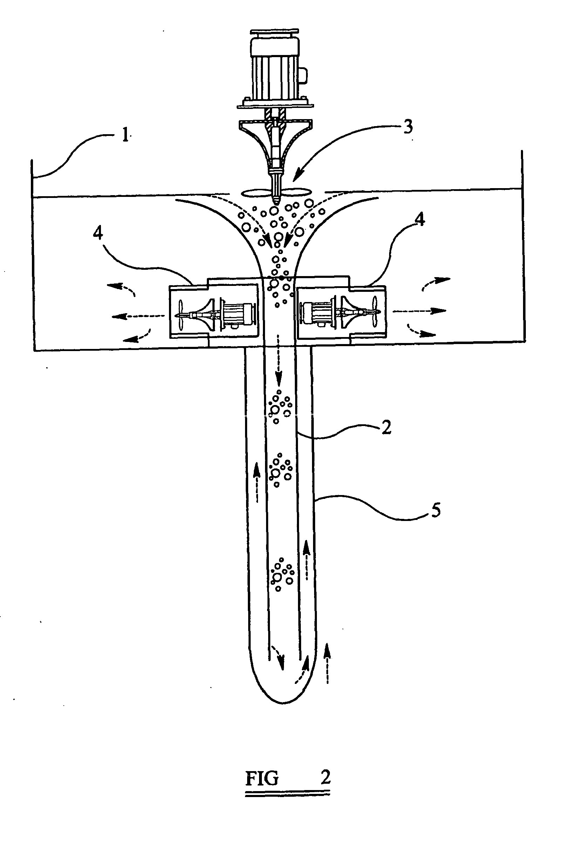

Referring to Figure 2 of the accompanying drawing, an apparatus for aerating a liquid according to the present invention is illustrated.

The apparatus comprises a reactor 1 for storing a liquid to be treated, a vertical pipe 2 suspended in reactor 1 and extending through the bottom of the reactor 1 deep into the underground below, a surface agitator as a means for bubble generation 3, means for inducing flow 4, and a concentric pipe 5 enclosing the first vertical pipe 2 as a means for returning aerated liquid back to the reactor 1.

According to the present invention, the liquid flow is induced by a suction pressure that is drawn on the liquid return line.

If required, air liquid contact pressure up to 100 m of hydrostatic head may be achieved. The higher contact pressure allows much greater dissolved oxygen level and greater energy efficiency.

A person skilled in the art will appreciate that most of the energy used in the operation of the present invention is expended in inducing the liquid flow. There are many types of known devices in use for inducing liquid flow but it is important to select the most energy efficient device that is appropriate for this application. It has been found that the most suitable type of flow inducer for the present invention is the marine impeller of the type commonly used for propelling ships and boats

Alternatively helical screw type devices are also suitable. It should be noted that the flow of liquid also serves another important function in providing effective mixing of the contents of the reactor. In most situations, the return flow from the apparatus of the present invention provides the necessary mixing and distribution of the aerated liquid throughout the reactor without any further energy input.

It will be appreciated that many modifications and enhancements may be made to the basic treatment system outlined herein. For instance, the methods of pumping the liquid and of agitating the liquid may be varied. The total number of reactors can vary to suite any particular application, as can the relative size of the reactor to the size of the aerator. The aerated liquid may also be used for applications other than biological treatment, for example but not limited to the dissolved air flotation for solid liquid separation.

Other possible modifications or applications will be readily apparent to the appropriately skilled person.

EXAMPLES.

Example 1. (not according to the present invention)

A sewage treatment plant operating a conventional activated sludge process was equipped with an aerator as illustrated by Figure 1 of the accompanying drawing. The reactor volume was 85 m$^3$; the vertical pipe was 0.6metres in diameter and 5metres in length. The bell-mouth-shaped weir was 1.2metres in diameter and a marine impeller powered by a submersible electric motor was used to draw the activated sludge down the vertical pipe and for returning the aerated sludge back into the reactor. The liquid velocity in the vertical pipe was 25 cm/s. The plant treated a throughput of 279m$^3$/d of a settled sewage with 215 mg/L BOD. The sludge age in the reactor was maintained at approximately 7 days. The aerator was able to maintain the activated sludge process with a dissolved oxygen level approximately 1 mg/L. It was found that the effluent contained just 5 mg/L BOD after settlement of the suspended solids. The actual aerator efficiency was found to be 2.8 kg O$_2$/kWh.

Example 2. (according to the present invention)

The aerator in example 1 was replaced with an aerator as illustrated by Figure 2 of the accompanying drawing. The vertical pipe was 0.15 metre in diameter and 85 metres in length. A flat blade radial turbine impeller was used as a surface agitator for bubble generation and two marine impellers powered by submersible electric motors were used to draw the activated sludge down the vertical pipe and for returning the aerated sludge back into the reactor. The liquid velocity in the vertical pipe was 50 cm/s. The performance of the activated sludge was not significantly affected by the change in the aerator. The aerator efficiency was found to be 7.5 kg O$_2$/kWh.

**Claims**

1.  A method suitable for aerating a liquid, the method comprising the steps of:

    (i) drawing the liquid to be treated down a vertical pipe at a predetermined velocity in the range of 5 cm/s to 100 cm/s to entrain air bubbles comprising oxygen-enriched air into the moving liquid forming an air liquid mixture wherein the vertical pipe has a length in the range of 10 to 90 metres and is located below the reactor;
    (ii) maintaining the air bubbles in liquid contact for a minimum period of between 5 seconds and 500 seconds under increasing hydrostatic pressure to dissolve the air; and
    (iii) returning the aerated liquid to the reactor,
    wherein the air bubbles are generated within 50cm of the liquid surface above or close to the inlet of said vertical pipe; wherein the size range of the air bubbles is 0.2 to 5.00mm in diameter; and wherein the hydrostatic pressure is defined by the product of the downflow liquid velocity and the air contact time in the vertical pipe and wherein the air-water mixture comprises 3 to 30% air by volume under normal atmospheric conditions.

2. A method according to claim 1 wherein the liquid velocity is in the range of 20 cm/s to 75 cm/s.

3. A method according to any of the preceding claims wherein the contact period is in the range of 10 seconds to 300 seconds.

4. A method according to any of the preceding claims wherein the air bubbles are generated within 5 cm of the liquid surface.

5. A method according to any of the preceding claims wherein the air-water mixture comprises 5 to 25% air by volume under normal atmospheric condition.

6. An apparatus suitable for use in aerating a liquid in a reactor (1), comprising:

    (i) a vertical pipe (2) in liquid communication with said reactor and being arranged so that surface liquid can be drawn into the pipe at a velocity of between 5 cm/s to 100 cm/s, wherein, the length of the pipe is in the range 10 and 90 metres and is located below the reactor and is sufficient to provide a minimum air liquid contact period under increasing hydrostatic pressure; and
    (ii) a means for generating air bubbles (3) close to the surface of the liquid above or close to the inlet of said vertical pipe wherein the size range of the air bubbles is between 0.2 to 5.00 mm in diameter; and further comprising,
    a means (5) for returning the aerated liquid back into the reactor; and
    a means for drawing the liquid down the pipe.

7. An apparatus as claimed in claim 6, wherein the length of the vertical pipe is in the range 25 metres to 75 metres.

8. An apparatus according to any of claims 6 or 7 wherein the vertical pipe is completely submerged within the reactor.

9. An apparatus according to any of claims 6 to 8 wherein the vertical pipe is disposed completely on the outside the reactor.

10. An apparatus according to any of claims 6 to 8 wherein a bottom portion of the vertical pipe is disposed underneath the reactor.

11. An apparatus according to any of claims 6 to 10 wherein the means for generating air bubbles comprises one or more means selected from the group comprising: overflow weirs, rotating impellers, membrane diffusers, coarse diffusers and nozzles in conjunction with air blowers or compressors.

12. An apparatus according to any of claims 6 to 11 wherein the means for drawing the liquid down the pipe comprises a liquid moving devices.

13. An apparatus according to claim 12 wherein the means for drawing the liquid down the pipe is a marine impeller or a helical screw.

14. Use of the method as described in any of claims 1 to 5 in a reactor for the treatment of wastewaters by one or more biological processes.

15. Use of the apparatus as claimed in any of claims 6 to 13 in combination with a reactor for the treatment of wastewaters by one or more biological processes.

**Patentansprüche**

1. Verfahren, das für die Belüftung einer Flüssigkeit geeignet ist, wobei das Verfahren die folgenden Schritte aufweist:

    (i) Absaugen der zu behandelnden Flüssigkeit nach unten in ein vertikales Rohr mit einer vorgegebenen Geschwindigkeit im Bereich von 5 cm/s bis 100 cm/s, um Luftblasen, die sauerstoffangereicherte Luft aufweisen, in der sich bewegenden Flüssigkeit mitzureißen, wodurch eine Luft-Flüssigkeits-Mischung gebildet wird, wobei das vertikale Rohr eine Länge im Bereich von 10 bis 90 Meter aufweist und sich unterhalb des Reaktionsapparates befindet;

(ii) Halten der Luftblasen in Flüssigkeitskontakt über eine minimale Zeitdauer von zwischen 5 Sekunden und 500 Sekunden unter ansteigendem hydrostatischem Druck, um die Luft aufzulösen; und

(iii) Rückführen der belüfteten Flüssigkeit zum Reaktionsapparat,

wobei die Luftblasen innerhalb von 50 cm von der Flüssigkeitsoberfläche oberhalb oder in der Nähe des Eintrittes des vertikalen Rohres erzeugt werden; wobei der Größenbereich der Luftblasen einen Durchmesser von 0,2 bis 5,00 mm aufweist; und wobei der hydrostatische Druck durch das Produkt der Geschwindigkeit der nach unten strömenden Flüssigkeit und der Luftkontaktzeit im vertikalen Rohr definiert wird, und wobei die Luft-Wasser-Mischung 3 bis 30 Vol.-% Luft unter normalen atmosphärischen Bedingungen aufweist.

2.  Verfahren nach Anspruch 1, bei dem die Geschwindigkeit der Flüssigkeit im Bereich von 20 cm/s bis 75 cm/s liegt.

3.  Verfahren nach einem der vorhergehenden Ansprüche, bei dem die Kontaktzeitdauer im Bereich von 10 Sekunden bis 300 Sekunden liegt.

4.  Verfahren nach einem der vorhergehenden Ansprüche, bei dem die Luftblasen innerhalb von 5 cm von der Flüssigkeitsoberfläche erzeugt werden.

5.  Verfahren nach einem der vorhergehenden Ansprüche, bei dem die Luft-Wasser-Mischung 5 bis 25 Vol.-% Luft unter normalen atmosphärischen Bedingungen aufweist.

6.  Vorrichtung, die für eine Verwendung bei der Belüftung einer Flüssigkeit in einem Reaktionsapparat (1) geeignet ist, die aufweist:

(i) ein vertikales Rohr (2) in Flüssigkeitsverbindung mit dem Reaktionsapparat und so angeordnet, dass die Oberflächenflüssigkeit in das Rohr mit einer Geschwindigkeit von zwischen 5 cm/s bis 100 cm/s angesaugt werden kann, wobei die Länge des Rohres im Bereich von 10 bis 90 Meter liegt und unterhalb des Reaktionsapparates angeordnet und ausreichend ist, um eine minimale Luft-Flüssigkeits-Kontaktzeitdauer unter einem ansteigenden hydrostatischen Druck bereitzustellen; und

(ii) eine Einrichtung für das Erzeugen von Luftblasen (3) in der Nähe der Oberfläche der Flüssigkeit oberhalb oder in der Nähe des Eintrittes des vertikalen Rohres, wobei der Größenbereich der Luftblasen bei einem Durchmesser von zwischen 0,2 bis 5,00 mm liegt; und die außerdem aufweist:

eine Einrichtung (5) für das Rückführen der belüfteten Flüssigkeit zurück in den Reaktionsapparat; und eine Einrichtung für das Ansaugen der Flüssigkeit nach unten im Rohr.

7.  Vorrichtung nach Anspruch 6, bei der die Länge des vertikalen Rohres im Bereich von 25 Meter bis 75 Meter liegt.

8.  Vorrichtung nach einem der Ansprüche 6 oder 7, bei der das vertikale Rohr vollständig innerhalb des Reaktionsapparates untergetaucht ist.

9.  Vorrichtung nach einem der Ansprüche 6 bis 8, bei der das vertikale Rohr vollständig auf der Außenseite des Reaktionsapparates angeordnet ist.

10. Vorrichtung nach einem der Anspruch 6 bis 8, bei der ein unterer Abschnitt des vertikalen Rohres unterhalb des Reaktionsapparates angeordnet ist.

11. Vorrichtung nach einem der Ansprüche 6 bis 10, bei der die Einrichtung für das Erzeugen der Luftblasen eine oder mehr Einrichtungen aufweist, die aus der Gruppe ausgewählt werden, die aufweist: Überlaufwehre; sich drehende Laufräder; Membrandiffusoren; Grobdiffusoren; und Düsen in Verbindung mit Luftgebläsen oder Kompressoren.

12. Vorrichtung nach einem der Ansprüche 6 bis 11, bei der die Einrichtung für das Ansaugen der Flüssigkeit im Rohr nach unten eine Flüssigkeitsbewegungsvorrichtung aufweist.

13. Vorrichtung nach Anspruch 12, bei der die Einrichtung für das Ansaugen der Flüssigkeit im Rohr nach unten ein Schiffsantriebsrad oder eine Schrägzahnradschiffsschraube ist.

**14.** Anwendung des Verfahrens nach einem der Ansprüche 1 bis 5 in einem Reaktionsapparat für die Behandlung von Abwasser mittels eines oder mehrerer biologischer Prozesse.

**15.** Verwendung der Vorrichtung nach einem der Ansprüche 6 bis 13 in Verbindung mit einem Reaktionsapparat für die Behandlung von Abwasser mittels eines oder mehrerer biologischer Prozesse.

**Revendications**

**1.** Procédé destiné à aérer un liquide, le procédé comprenant les étapes ci-dessous :

(i) aspiration du liquide devant être traité le long d'un tube vertical à une vitesse prédéterminée, compris dans l'intervalle allant de 5 cm/s à 100 cm/s pour entraîner des bulles d'air comprenant de l'air enrichi en oxygène dans le liquide en écoulement, formant un mélange d'air et de liquide, le tube vertical ayant une longueur comprise dans l'intervalle allant de 10 à 90 mètres et étant agencé au-dessous du réacteur ;
(ii) maintien des bulles d'air en contact liquide pendant une période minimale, comprise entre 5 secondes et 500 secondes en présente d'une pression hydrostatique croissante pour dissoudre l'air ; et
(iii) retour du liquide séparé vers le réacteur ;
les bulles d'air étant produites jusqu'à 50 cm en dessous de la surface du liquide, au-dessus de l'entrée dudit tube vertical ou près de celle-ci ; l'intervalle dimensionnel des bulles d'air présentant un diamètre compris entre 0,2 et 5,00 mm, la pression hydrostatique étant définie par le produit de la vitesse d'écoulement du liquide vers le bas et le temps de contact avec l'air dans le tube vertical, le mélange air-eau comprenant 3 à 30% d'air en volume dans des conditions atmosphériques normales.

**2.** Procédé selon la revendication 1, dans lequel la vitesse du liquide est comprise dans l'intervalle allant de 20 cm/s à 75 cm/s.

**3.** Procédé selon l'une quelconque des revendications précédentes, dans lequel la période de contact est comprise dans l'intervalle allant de 10 secondes à 300 secondes.

**4.** Procédé selon l'une quelconque des revendications précédentes, dans lequel les bulles d'air sont produites jusqu'à 5 cm en dessous de la surface du liquide.

**5.** Procédé selon l'une quelconque des revendications précédentes, dans lequel le mélange air-eau comprend 5 à 25% d'air en volume dans des conditions atmosphériques normales.

**6.** Appareil destiné à être utilisé pour aérer un liquide dans un réacteur (1), comprenant :

(i) un tube vertical (2), en communication de liquide avec ledit réacteur, et agencé de sorte que le liquide de surface peut être aspiré dans le tube à une vitesse comprise entre 5 cm/s et 100 cm/s, la longueur du tube étant comprise dans l'intervalle allant de 10 à 90 mètres, agencée au-dessous du réacteur, et étant suffisante pour assurer une période de contact minimale entre l'air et le liquide en présence d'une pression hydrostatique croissante; et
(ii) un moyen pour produire des bulles d'air (3), près de la surface du liquide, au-dessus de l'entrée dudit tube vertical ou près de celle-ci, la taille des bulles d'air présentant un diamètre compris entre 0,2 et 5,00 mm ; et comprenant en outre :

un moyen (5) pour ramener le liquide aéré dans le réacteur ; et un moyen pour aspirer le liquide le long du tube.

**7.** Appareil selon la revendication 6, dans lequel la longueur du tube vertical est comprise dans l'intervalle allant de 25 mètres à 75 mètres.

**8.** Appareil selon l'une quelconque des revendications 6 à 7, dans lequel le tube vertical est complètement immergé dans le réacteur.

9. Appareil selon l'une quelconque des revendications 6 à 8, dans lequel le tube vertical est complètement agencé sur l'extérieur du réacteur.

10. Appareil selon l'une quelconque des revendications 6 à 8, dans lequel une partie inférieure du tube vertical est positionnée au-dessous du réacteur.

11. Appareil selon l'une quelconque des revendications 6 à 10, dans lequel le moyen destiné à produire des bulles d'air comprend un ou plusieurs moyens sélectionnés dans le groupe comprenant : des barrages déversoirs, des hélices rotatives, des diffuseurs à membrane, des diffuseur de grosses particules et des buses, en combinaison avec des soufflantes ou des compresseurs.

12. Appareil selon l'une quelconque des revendications 6 à 11, dans lequel le moyen destiné à aspirer le liquide le long du tube comprend un dispositif de déplacement du liquide.

13. Appareil selon la revendication 12, dans lequel le moyen destiné à aspirer le liquide le long du tube est une hélice marine ou une vis hélicoïdale.

14. Utilisation du procédé selon l'une quelconque des revendications 1 à 5 dans un réacteur destiné au traitement des eaux usées par l'intermédiaire d'un ou de plusieurs processus biologiques.

15. Utilisation de l'appareil selon l'une quelconque des revendications 6 à 13, en combinaison avec un réacteur pour le traitement des eaux usées par l'intermédiaire d'un ou de plusieurs processus biologiques.

FIG 1

FIG    2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4253949 A, Hines
- US 4466928 A
- US 7121534 B
- FR 2798602